# EUROPEAN PATENT SPECIFICATION

(11) **EP 4 151 293 B1**
(45) Date of publication and mention of the grant of the patent: **02.12.2026**
(21) Application number: 21935453.7
(22) Date of filing: 20.10.2021
(51) Int. Cl.: A63F 13/426, A63F 13/2145, A63F 13/45, A63F 13/53, A63F 13/55, A63F 13/822, A63F 13/92

(54) **VIRTUAL OBJECT SKILL RELEASING METHOD AND APPARATUS, DEVICE, MEDIUM, AND PROGRAM PRODUCT**
VERFAHREN UND VORRICHTUNG FÜR DEN EINSATZ EINER FÄHIGKEIT EINES VIRTUELLEN OBJEKTES, VORRICHTUNG, MEDIUM UND PROGRAMMPRODUKT
PROCÉDÉ ET APPAREIL DE LIBÉRATION DE COMPÉTENCE D'OBJET VIRTUEL, DISPOSITIF, SUPPORT ET PRODUIT DE PROGRAMME

(30) Priority: 03.08.2021 CN 202110888291
(43) Date of publication of application: 22.03.2023
(73) Proprietor: Tencent Technology (Shenzhen) Company Limited, Shenzhen, Guangdong 518057 (CN)
(72) Inventor: LI, Renjie, Shenzhen, Guangdong 518057 (CN)
(74) Representative: Novagraaf International SA
(86) International application number: PCT/CN2021/125019
(87) International publication number: WO 2023/010690

(56) References cited:
- CN-A- 109 107 153
- CN-A- 109 107 153
- CN-A- 109 117 050
- CN-A- 111 589 140
- CN-A- 111 659 107
- CN-A- 111 672 103
- US-A1- 2018 339 229

## Description

This application claims priority to Chinese Patent Application No. 202110888291.2, entitled "METHOD AND APPARATUS FOR CONTROLLING VIRTUAL CHARACTER TO CAST SKILL, DEVICE, MEDIUM, AND PROGRAM PRODUCT" filed on August 3, 2021.

### FIELD OF THE TECHNOLOGY

The present disclosure relates to the field of supporting human-machine interaction, and in particular, to a method and an apparatus for controlling a virtual object to cast a skill, a device, a medium, and a program product.

### BACKGROUND OF THE DISCLOSURE

A battle game is a game in which multiple user accounts compete in the same scene. Optionally, the battle game may be a multiplayer online battle arena (MOBA) game.

In a typical MOBA game, a player may control a virtual character to cast a ranged skill to attack at least one enemy virtual character in a specified range. A client displays a virtual character in a virtual environment and a skill button. After a user clicks/taps the skill button, the client displays a ranged skill indicator on the ground in the virtual environment. The ranged skill indicator is used to indicate a casting range of a ranged skill. The user may control a direction, a location, and a distance of the casting range by dragging the skill button.

In a case of unfixed quantity of scattered enemy virtual characters, because a casting range of a skill is fixed, a terminal needs to receive multiple operations for selecting multiple casting ranges, to cast the skill to the multiple scattered enemy virtual characters, resulting in low processing efficiency of the terminal in attacking the enemy virtual characters. CN109117050 relates to a multi-arm and multi-skill operation method, which comprises the following steps: obtaining a skill list of all arms, and displaying the skill list in a preset order on a touch interface; acquiring a skill selected from the skill list, determining a spell casting unit and a spell casting range according to the selected skill; displaying a casting area of the selected skill in a game interface; obtaining a spell casting instruction to release the selected skill within the spell casting area.

### SUMMARY

The invention is as defined in the appended set of claims.

### BRIEF DESCRIPTION OF THE DRAWINGS

FIG. 1 is a block diagram of a computer system according to an exemplary embodiment in the present disclosure. FIG. 2 is a flowchart of a method for controlling a virtual character to cast a skill according to an exemplary embodiment in the present disclosure.
FIG. 3 is a schematic diagram of an interface with a ranged skill indicator being rectangular according to an exemplary embodiment in the present disclosure.
FIG. 4 is a schematic diagram of an interface with a ranged skill indicator being circular according to an exemplary embodiment in the present disclosure.
FIG. 5 is a schematic diagram of an interface with a ranged skill indicator being hexagonal according to an exemplary embodiment in the present disclosure.
FIG. 6 is a flowchart of a method for controlling a virtual character to cast a skill according to an exemplary embodiment in the present disclosure.
FIG. 7 is a schematic diagram of a wheel control according to an exemplary embodiment in the present disclosure.
FIG. 8 is a schematic diagram of an interface of a skill effective range according to an exemplary embodiment in the present disclosure.
FIG. 9 is a schematic diagram of determining a current skill effective range according to an exemplary embodiment in the present disclosure.
FIG. 10 is a flowchart of a method for controlling a virtual character to cast a skill according to an exemplary embodiment in the present disclosure.
FIG. 11 is a schematic diagram of an interface for controlling a casting range of a virtual character using a drag button according to an exemplary embodiment in the present disclosure.
FIG. 12 is a flowchart of a method for controlling a virtual character to cast a skill according to an exemplary embodiment in the present disclosure.
FIG. 13 is a block diagram of an apparatus for controlling a virtual character to cast a skill according to an exemplary embodiment in the present disclosure.
FIG. 14 is a schematic diagram of an apparatus structure of a computer device according to an exemplary embodiment in the present disclosure.

### DESCRIPTION OF EMBODIMENTS

To make the objectives, technical solutions, and advantages in the present disclosure clearer, the following further describes implementations in the present disclosure in detail with reference to the accompanying drawings.

First, terms involved in the embodiments in the present disclosure are introduced.

Virtual environment: A virtual environment is a virtual environment displayed (or provided) by an application program when run on a terminal. The virtual environment may be a simulated world of a real world, or may be a semi-simulated semi-fictional three-dimensional world, or may be an entirely fictional three-dimensional world. The virtual environment may be any one of a two-dimensional virtual environment, a 2.5-dimensional virtual environment, or a three-dimensional virtual environment. Optionally, the virtual environment is further used for a virtual environment battle between at least two virtual characters, and there are virtual resources available to the at least two virtual characters in the virtual environment. Optionally, the virtual environment includes a lower left corner region and an upper right corner region that are symmetrical. Virtual characters belonging to two opposing camps occupy the regions respectively, and the objective of each side is to destroy a target building/fort/base/crystal deep in the opponent's region to win victory.

Virtual object: A virtual object is a movable object in a virtual environment. The movable object may be at least one of a virtual character, a virtual animal, or an animation or cartoon figure. Optionally, when the virtual environment is a three-dimensional virtual environment, the virtual character may be a three-dimensional model. Each virtual character has a shape and a volume in the three-dimensional virtual environment, and occupies some space in the three-dimensional virtual environment. Optionally, the virtual character is a three-dimensional character constructed based on three-dimensional human skeleton technology. The virtual character wears different skins to have different appearances. In some implementations, the virtual character may be alternatively implemented by using a 2.5-dimensional model or a two-dimensional model. This is not limited in the embodiments in the present disclosure.

MOBA: MOBA is an arena in which different virtual teams on at least two opposing camps occupy respective map regions in a virtual environment, and compete against each other to achieve a goal of meeting a specific victory condition. The victory condition includes, but is not limited to, at least one of occupying a fort or destroying a fort of the opposing side, killing virtual characters on the opposing side, ensuring own survival in a specified scene and time, seizing a specific resource, or outscoring the opponent within a specified time. The battle arena game may take place in rounds. The same map or different maps may be used in different rounds of the battle arena game. Each virtual team includes one or more virtual characters, for example, 1 virtual character, 2 virtual characters, 3 virtual characters, or 5 virtual characters.

MOBA game: A MOBA game is a game in which several forts are provided in a virtual environment, and users on different camps control virtual characters to battle in the virtual environment to occupy forts or destroy forts of the opposing camp. For example, in the MOBA game, the users may be divided into two opposing camps. The virtual characters controlled by the users are scattered in the virtual environment to compete against each other, and the victory condition is to destroy or occupy all opponent forts. The MOBA game takes place in rounds. A duration of one round of the MOBA game is from a moment at which the game starts to a movement at which the victory condition is met.

User interface (UI) control: A user interface control is any visual control or element that can be seen on a user interface of an application program, such as a picture, an input box, a text box, a button, or a label. Some user interface controls respond to an operation of a user. For example, a skill control controls a master virtual character to cast a skill. The user triggers the skill control to control the master virtual character to cast the skill. UI controls involved in the embodiments in the present disclosure include, but are not limited to: skill controls and movement controls.

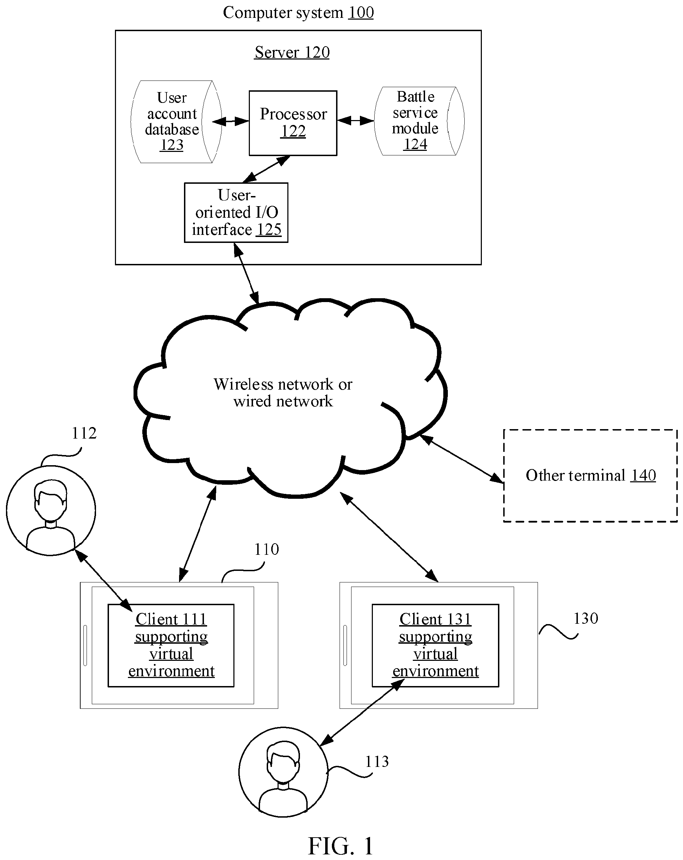

FIG. 1 is a structural block diagram of a computer system according to an exemplary embodiment in the present disclosure. The computer system 100 includes a first terminal 110, a server 120, and a second terminal 130.

A client 111 supporting a virtual environment is installed and run on the first terminal 110, and the client 111 may be a multiplayer online battle program. When the first terminal runs the client 111, a UI of the client 111 is displayed on a screen of the first terminal 110. The client 111 may be any one of a military simulation program, an escape shooting game, a virtual reality (VR) application program, an augmented reality (AR) program, a three-dimensional map program, a VR game, an AR game, a first-person shooting (FPS) game, a third-person shooting (TPS) game, a MOBA game, or a simulation game (SLG). In this embodiment, an example in which the client 111 is a MOBA game is used for description. The first terminal 110 is a terminal used by a first user 112. The first user 112 uses the first terminal 110 to control a first virtual character located in the virtual environment to perform activities, and the first virtual character may be referred to as a master virtual character of the first user 112. The activities of the first virtual character include, but are not limited to: at least one of moving, jumping, teleporting, casting a skill, adjusting body postures, crawling, walking, running, riding, flying, driving, picking, shooting, attacking, or throwing. For example, the first virtual character is a first virtual person character, for example, a simulated person character or a cartoon person character.

A client 131 supporting a virtual environment is installed and run on the second terminal 130, and the client 131 may be a multiplayer online battle program. When the second terminal 130 runs the client 131, a UI of the client 131 is displayed on a screen of the second terminal 130. The client may be any one of a military simulation program, an escape shooting game, a VR application program, an AR program, a three-dimensional map program, a VR game, an AR game, an FPS game, a TPS game, a MOBA game, or an SLG. In this embodiment, an example in which a client is a MOBA game is used for description. The second terminal 130 is a terminal used by a second user 113. The second user 113 uses the second terminal 130 to control a second virtual character located in the virtual environment to perform activities, and the second virtual character may be referred to as a master virtual character of the second user 113. For example, the second virtual character is a second virtual person character, for example, a simulated person character or a cartoon person character.

Optionally, the first virtual character and the second virtual character are located in a same virtual environment. Optionally, the first virtual character and the second virtual character may belong to the same camp, the same team, or the same organization, have a friend relationship, or have a temporary communication permission. Optionally, the first virtual character and the second virtual character may belong to different camps, different teams, or different organizations, or have an adversarial relationship with each other.

Optionally, the client installed on the first terminal 110 is the same as the client installed on the second terminal 130, or the clients installed on the two terminals are the same type of clients of different operating system platforms (Android system or iOS system). The first terminal 110 may generally refer to one of a plurality of terminals, and the second terminal 130 may generally refer to another one of a plurality of terminals. In this embodiment, only the first terminal 110 and the second terminal 130 are used as an example for description. The first terminal 110 and the second terminal 130 are of the same or different device types. The device type includes at least one of a smartphone, a tablet computer, an e-book reader, a Moving Picture Experts Group Audio Layer III (MP3) player, a Moving Picture Experts Group Audio Layer IV (MP4) player, a laptop computer, or a desktop computer.

FIG. 1 shows only two terminals. However, a plurality of other terminals 140 may be connected to the server 120 in different embodiments. Optionally, one or more terminals 140 are terminals corresponding to a developer. A developing and editing platform for the client supporting a virtual environment is installed on the terminal 140. The developer may edit and update the client on the terminal 140 and transmit an updated client installation package to the server 120 by using a wired or wireless network. The first terminal 110 and the second terminal 130 may download the client installation package from the server 120 to update the client.

The first terminal 110, the second terminal 130, and the terminal 140 are connected to the server 120 through a wireless network or a wired network.

The server 120 may be one server, a plurality of servers, a cloud computing platform, or a virtualization center. The server 120 is configured to provide a background service for a client supporting a virtual environment. Optionally, the server 120 is responsible for primary computing work, and the terminal is responsible for secondary computing work. Alternatively, the server 120 is responsible for secondary computing work, and the terminal is responsible for primary computing work. Alternatively, the server 120 and the terminal perform collaborative computing by using a distributed computing architecture therebetween.

In a schematic example, the server 120 includes a processor 122, a user account database 123, a battle service module 124, and a user-oriented input/output (I/O) interface 125. The processor 122 is configured to load instructions stored in the server 121, and process data in the user account database 123 and the battle service module 124. The user account database 123 is configured to store data of user accounts used by the first terminal 110, the second terminal 130, and the another terminal 140, for example, avatars of the user accounts, nicknames of the user accounts, battle effectiveness indexes of the user accounts, and service zones of the user accounts. The battle service module 124 is configured to provide a plurality of battle rooms for the users to battle, for example, a 1V1 battle room, a 3V3 battle room, a 5V5 battle room, and the like. The user-oriented I/O interface 125 is configured to establish communication between the first terminal 110 and/or the second terminal 130 by using a wireless network or a wired network for data exchange.

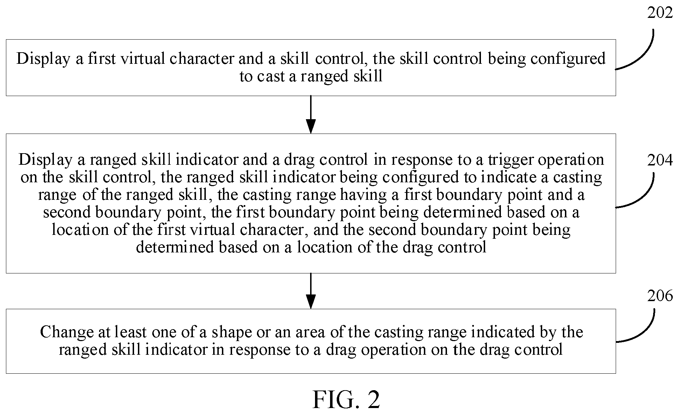

FIG. 2 is a flowchart of a method for controlling a virtual character to cast a skill according to an exemplary embodiment in the present disclosure. The method may be performed by a computer device, and for example, may be performed by a terminal or a client on a terminal in a system as shown in FIG. 1. As shown in FIG. 2, the method includes steps 202 to 206.

Step 202: Display a first virtual character and a skill control, the skill control being used to cast a ranged skill.

The first virtual character is a virtual character controlled by a user. The client controls, according to a received human-machine interaction operation from a first user, the first virtual character to move in a virtual environment. Exemplarily, the virtual environment is a three-dimensional virtual environment.

A skill is an ability that is used or cast by a first virtual character, that attacks the first virtual character (including another virtual character and the first virtual character), and that increases or decreases values. The skills include an active skill and a passive skill. The active skill is a skill used or cast by a virtual character actively. The passive skill is a skill that is automatically triggered when a passive condition is satisfied. Exemplarily, the skill mentioned in this embodiment is an active skill actively used or cast by the first virtual character controlled by the user.

Exemplarily, the skills may be classified into targeted skills and ranged skills. The targeted skill is a skill that requires specifying a casting direction or a casting target when casting the skill. The ranged skill is a skill that requires specifying a casting range when casting the skill. The skill mentioned in this embodiment generally refers to a ranged skill. That is, the ranged skill is a skill that is cast by the first virtual character and that has a specific region range as a skill effective range.

Exemplarily, the ranged skill is named based on classification of the skill in terms of a manner in which the skill is cast. A process of using a skill by a first virtual character includes: a casting process and an effect-taking process. In the casting process, the terminal receives an operation with which the user casts a skill. In the effect-taking process, the terminal controls, based on an operation of the user, the virtual character to use a skill.

The ranged skill is a skill of which a casting range is determined through a user operation (trigger operation) in a skill casting process. In the effect-taking process of the ranged skill, the terminal controls, based on a selected casting range, the virtual character to use the skill.

In an optional implementation, the ranged skill is a skill that is cast in an effective range, where effective range is determined based on a casting range, and the casting range is selected based on a user operation. In an optional implementation, the ranged skill is a skill that is cast to a hit object, where the hit object is determined based on a casting range and the casting range is selected based on a user operation.

However, the targeted skill may be a skill that is cast toward an effect direction, where the effect direction is determined based on a casting direction and the casting direction is selected based on a user operation. In an optional implementation, the targeted skill may be a skill that is cast to a hit object, where the hit object is determined based on a casting direction and the casting direction is selected based on a user operation.

Exemplarily, when the ranged skill is cast, a casting range currently selected by the user is displayed in the virtual environment in real time based on a user operation. The casting range has attributes such as a location, a size, and a shape. In the methods in related art, only a location of a casting range can be changed through a user operation, and a size and a shape of the casting range are fixed. However, in the method provided by this embodiment in the present disclosure, at least one of the location, the size, or the shape of the casting range can be changed through a user operation.

Exemplarily, the "ranged skill" may also be referred to as "regional skill", "region skill", "range skill", or "non-targeted skill", and the "ranged skill indicator" may also be referred to as "regional skill indicator", "region skill indicator", "range skill indicator", or "non-targeted skill indicator ".

The skill control is a control used to control a virtual character to cast a skill. A control form of the skill control includes at least one of a button control or a wheel control.

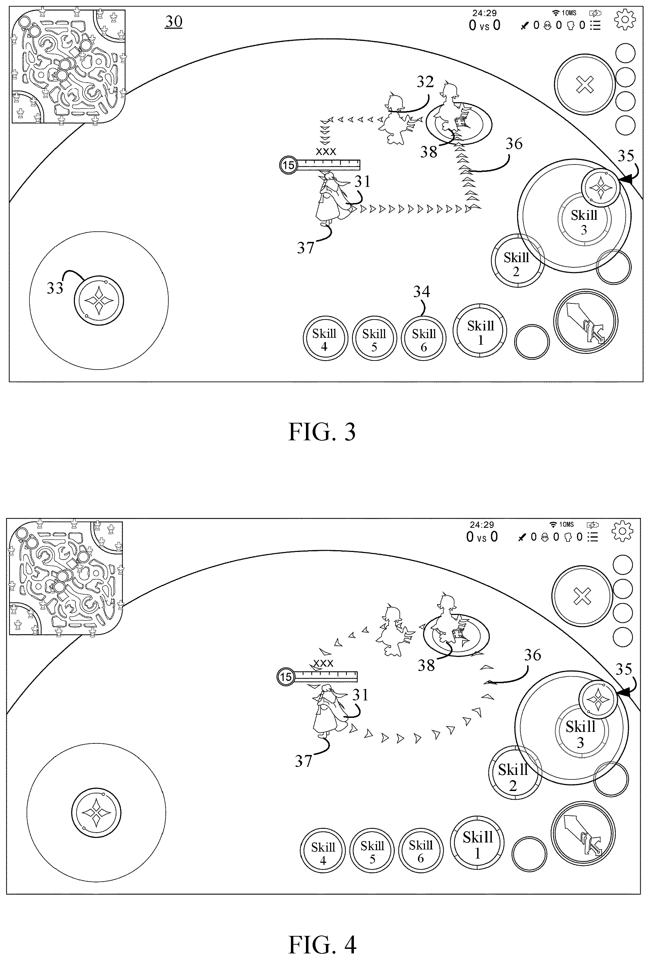

Exemplarily, as shown in FIG. 3, the client displays a user interface 30. The user interface 30 includes a virtual environment screen and at least one control.

The virtual environment screen is a screen obtained by observing the three-dimensional virtual environment from a perspective of a first virtual character 31. For example, a camera model is set in the three-dimensional virtual environment with the perspective of the first virtual character 31, and the three-dimensional virtual environment is photographed using the camera model, to obtain a virtual environment screen. The virtual environment screen includes the first virtual character 31 and a second virtual character 32 located in the virtual environment. Optionally, the second virtual character 32 is an enemy virtual character.

At least one control is suspended on the virtual environment screen in the form of a head-up display (HUD) layer. That is, even if screen content of the virtual environment screen changes, the display location of the at least one control is not affected by the screen content. The at least one control includes a mobile wheel 33 on the left and a plurality of skill controls 34 on the right. The mobile wheel 33 is used to control the movement of the first virtual character 31 in the virtual environment, and the plurality of skill controls 34 are used to control the first virtual character 31 to cast various skills.

Schematically, the plurality of skill controls 34 include six skill buttons of skills 1 to 6, and three normal attack buttons in the lower right corner. In this embodiment, it is assumed that the skill 3 is a skill button of a ranged skill. In a host game scene, the skill controls 34 may be implemented as physical keys or a physical joystick.

Step 204: Display a ranged skill indicator and a drag control in response to a trigger operation on the skill control, the ranged skill indicator being used to indicate a casting range of the ranged skill, the casting range having a first boundary point and a second boundary point, the first boundary point being determined based on a location of the first virtual character, and the second boundary point being determined based on a location of the drag control.

The trigger operation is a user operation received by the client and acting on a skill button, and the client generates a trigger instruction according to the received user operation. Exemplarily, the user operation may be at least one of an operation on a UI control, a voice operation, an action operation, a text operation, a mouse operation, a keyboard operation, or a game joystick operation.

The ranged skill indicator is used to indicate a casting range of the ranged skill. Optionally, the ranged skill indicator is used to indicate a casting range of the ranged skill before the ranged skill is cast and takes effect. The ranged skill indicator is displayed on a reference plane of the virtual environment. The reference plane is a plane used for casting a ranged skill. Using the reference plane being the ground in the virtual environment as an example, the ranged skill indicator is a graphic indicator displayed on the ground of the virtual environment. The graphic indicator occupies a region on the ground of the virtual environment. The region is used for indicating a casting range of the ranged skill.

In this embodiment, the casting range is an enclosed region having a first boundary point and a second boundary point. Generally, the first boundary point and the second boundary point are two most distant points of the enclosed region. Schematically, the closed region is in a shape of any one of a square, a rectangle, a diamond, a circle, an ellipse, a hexagon, or a dodecagon. The first boundary point is determined based on a location of the first virtual character, and the second boundary point is determined based on a location of the drag control.

Using the reference plane being the ground as an example, the first boundary point is determined based on a location of a foothold of the first virtual character on the ground. The drag control is a control used to change a location of the second boundary point by a drag operation. The drag control may be displayed on the HUD layer or the reference plane. In a case that the drag control is displayed on the HUD layer, the second boundary point is determined based on a mapped location of the drag control mapped on the reference plane. The mapped location is obtained by mapping the display location of the drag control on the HUD layer to the reference plane. In a case that the drag control is displayed on the reference plane in the virtual environment, the second boundary point is determined based on a real-time location of the drag control on the reference plane.

Schematically, referring to FIG. 3, after the user clicks/taps the skill button of the skill 3, the drag control 35 and the ranged skill indicator 36 may be additionally displayed on the user interface 30. The ranged skill indicator 36 determines a rectangular region based on the first boundary point 37 and the second boundary point 38. The first boundary point 37 is a foothold of the first virtual character 31, and the second boundary point 38 is determined based on the mapped location of the drag control 35 mapped on the virtual ground.

Step 206: Change at least one of a shape or an area of the casting range indicated by the ranged skill indicator in response to a drag operation on the drag control.

The drag operation is an operation of dragging the drag control to move or slide. In a case that the drag control is displayed on the HUD layer, the drag operation is an operation of dragging the drag control to move on the HUD layer. In a case that the drag control is displayed on the reference plane, the drag operation is an operation of dragging the drag control to move on the reference plane.

A location of the second boundary point on the reference plane is changed in response to a drag operation on the drag control, to change the shape and/or the area of the casting range indicated by the ranged skill indicator based on constraints of the first boundary point and the second boundary point.

Using the casting range being in a rectangular shape as an example, changing the casting range is changing at least one of a shape and an area of the rectangular shape according to the movement of the second boundary point.

In conclusion, in the method provided in this embodiment, a drag operation on a drag control is received, two boundary points of a casting range are determined respectively based on a location of a first virtual character and a location of the drag control, and further, a shape and/or an area of the casting range are/is changed in response to the drag operation. The area and/or the shape of the casting range indicated by a ranged skill indicator can be changed by receiving only one operation. Therefore, a method of casting a ranged skill with a customized casting range is provided, to simplify processing of a terminal in attacking a plurality of enemy virtual characters at scattered locations, thereby improving the efficiency of the terminal processing a ranged skill.

In the embodiments in the present disclosure, the shape of the ranged skill indicator is not limited, provided that the shape can be determined using the first reference point and the second reference point. Schematically, the shape of the ranged skill indicator is any one of a square, a rectangle, a diamond, a circle, an ellipse, a hexagon, or a dodecagon. The first boundary point is determined based on a location of the first virtual character, and the second boundary point is determined based on a location of the drag control.

In some embodiments, the ranged skill indicator 36 is a rectangular region, as shown in FIG. 3. Schematically, the first boundary point 37 is positioned to a foothold of the first virtual character 31, and the second boundary point 38 is positioned to the mapped location of the drag control 35 mapped on the ground. A rectangular ranged skill indicator is a rectangle made by using the first boundary point 37 and the second boundary point 38 as two vertices on the diagonal of the rectangular region.

In some embodiments, the ranged skill indicator 36 is circular, as shown in FIG. 4. Schematically, the first boundary point 37 is positioned to a foothold of the first virtual character 31, and the second boundary point 38 is positioned to the mapped location of the drag control 35 mapped on the ground. A circular ranged skill indicator is a circle made by using a distance between the first boundary point 37 and the second boundary point 38 as a diameter and using a position that is equidistant to the two points as a center.

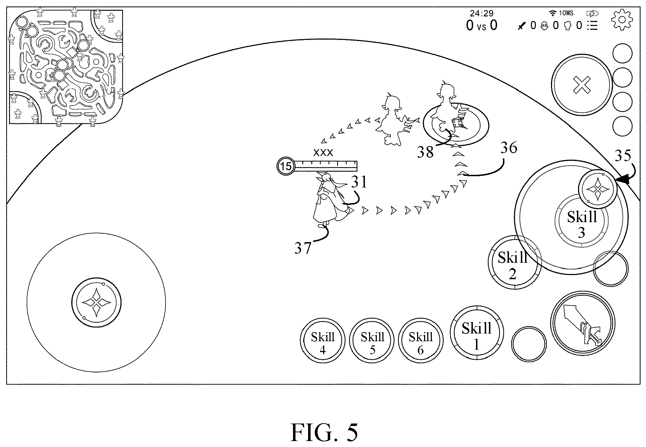

In some embodiments, the ranged skill indicator 36 is in a hexagonal shape, as shown in FIG. 5. Schematically, the first boundary point 37 is positioned to a foothold of the first virtual character 31, and the second boundary point 38 is positioned to the mapped location of the drag control 35 mapped on the ground. A hexagonal ranged skill indicator is a hexagon made by using the first boundary point 37 and the second boundary point 38 as two vertices on the diagonal of the hexagonal region.

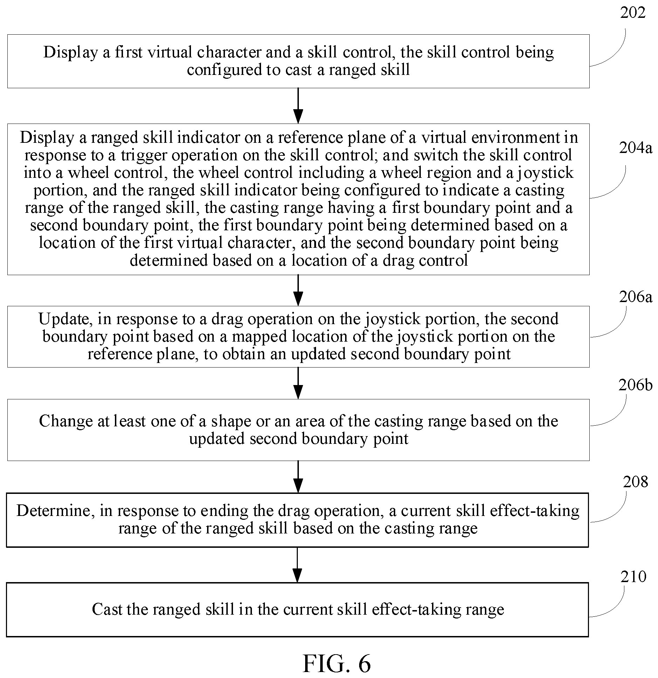

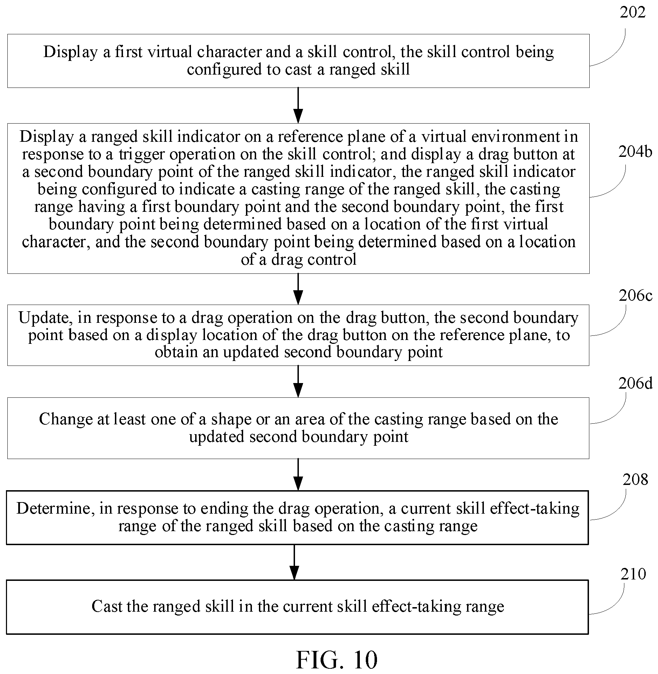

According to the display location, the drag control 35 may be implemented in at least the following two manners:
1. The drag control 35 is displayed on the HUD layer, which is described in the embodiment as shown in FIG. 6.
2. The drag control 35 is displayed on the reference plane of the virtual environment, which is described in the embodiment as shown in FIG. 10.

### First Manner

FIG. 6 is a flowchart of a method for controlling a virtual character to cast a skill according to an exemplary embodiment in the present disclosure. The method may be performed by a computer device. For example, the method may be performed by a terminal or a client on a terminal as shown in FIG. 1. As shown in FIG. 6, the method includes the following steps 202 to 210.

Step 202: Display a first virtual character and a skill control, the skill control being used to cast a ranged skill.

Reference may be made to step 202 shown in FIG. 2, and details are not described again.

Step 204a: Display a ranged skill indicator on a reference plane of a virtual environment in response to a trigger operation on the skill control; and switch the skill control into a wheel control, the wheel control including a wheel region and a joystick portion, and the ranged skill indicator being used to indicate a casting range of the ranged skill, the casting range having a first boundary point and a second boundary point, the first boundary point being determined based on a location of the first virtual character, and the second boundary point being determined based on a location of the drag control.

Schematically, the trigger operation is an operation of clicking/tapping the skill control. In an initial state, the skill control is displayed in the button form.

After the user clicks/taps the skill control, the ranged skill indicator is displayed on the reference plane of the virtual environment. In this embodiment, descriptions are provided by using the ranged skill indicator being a rectangular region skill indicator as an example. In addition, after the user clicks/taps the skill control, the skill control is further switched from being displayed as a button to being displayed as a wheel control. While displaying the wheel control, the original skill button is not displayed or is still retained at the original location.

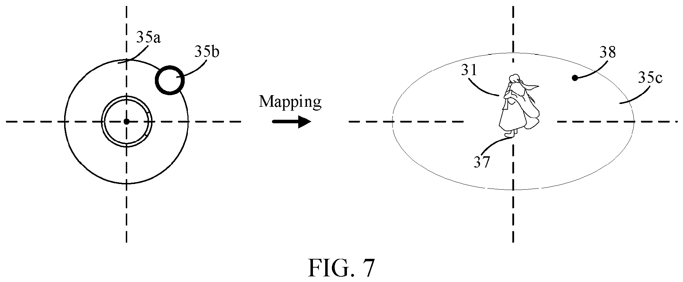

Schematically, referring to FIG. 7, the wheel control includes a wheel region 35a and a joystick portion 35b. Both the wheel region 35a and the joystick portion 35b are circular, and a display area of the joystick portion 35b is less than a display area of the wheel region 35a. The joystick portion 35b can be dragged to move within a circular range indicated by the wheel region 35a. A center of circle of the wheel region 35a corresponds to the foothold 37 of the first virtual character 31 on the ground of the virtual environment, that is, corresponds to the first boundary point 37. The wheel region 35a corresponds to a circular range 35c on the ground of the virtual environment, and a ratio between a radius of the wheel region 35a and a radius of the circular range 35c is a mapping ratio k. When the joystick portion 35b moves in the wheel region 35a, the second boundary point 38 is mapped on the ground of the virtual environment according to the mapping ratio k and according to a directional angle and a distance of the joystick portion 35b relative to the circle of the wheel region 35a.

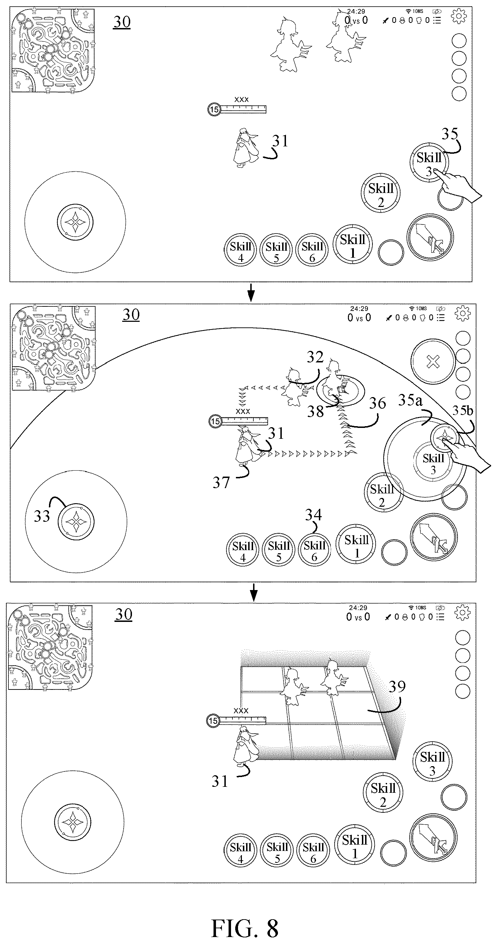

Schematically, referring to FIG. 8, in the initial state, the skill control 35 is displayed as a skill button. After the user clicks/taps the skill control 35, the wheel control 35 and the ranged skill indicator 36 are displayed on the reference plane of the virtual environment. The wheel control 35 includes a wheel region 35a and a joystick portion 35b. In this embodiment, descriptions are provided by using the ranged skill indicator 36 being a rectangular region skill indicator as an example. The ranged skill indicator 36 is determined based on the first boundary point 37 and the second boundary point 38. While displaying the wheel control 35, the original skill button "skill 3" is still retained at the original location.

Step 206a: Update, in response to a drag operation on the joystick portion, the second boundary point based on a mapped location of the joystick portion mapped on the virtual ground, to obtain an updated second boundary point.

After the terminal displays the ranged skill indicator 36, in response to detecting a drag operation on the joystick portion 35b, the second boundary point 38 is determined based on the mapped location of the joystick portion 35b mapped on the virtual ground.

For example, in response to that the terminal detects a leftward sliding operation on the joystick portion 35b, the terminal moves the mapped location of the joystick portion 35b mapped on the virtual ground leftward with the leftward sliding operation, to determine the second boundary point 38, and updates the display location of the second boundary point 38.

In an optional embodiment, the ranged skill has a plurality of candidate boundary points, and the second boundary point can only be selected from the plurality of candidate boundary points. In response to the drag operation on the joystick portion, the updated second boundary point is determined from the plurality of candidate boundary points based on the mapped location of the joystick portion mapped on the reference plane.

Exemplarily, a manner of determining the second boundary point based on the mapped location may be: determining a candidate boundary point nearest to the mapped location as an updated second boundary point; or determining a candidate boundary point at the upper right of the mapped location and nearest to the mapped location as an updated second boundary point; or determining a candidate boundary point at the lower left of the mapped location and the nearest to the mapped location as an updated second boundary point.

Exemplarily, each candidate boundary point corresponds to a candidate skill effective range. If the drag operation is ended when a corresponding candidate boundary point is selected as the second boundary point, the selected casting range is a skill effective range corresponding to the candidate boundary point. That is, in response to ending the drag operation, the ranged skill is cast in a current skill effective range, the current skill effective range being equal to a casting range.

Step 206b: Change at least one of a shape or an area of the casting range based on the updated second boundary point.

Because the casting range is determined based on the first boundary point and the second boundary point, in a case that the second boundary point is updated, the shape and/or the area of the casting range are/is changed based on the updated second boundary point.

Using the casting range being a rectangular shape as an example, this step includes the following two steps:
S1: Determine an updated rectangular shape by using the first diagonal point and the updated second diagonal point as two diagonal points of the rectangular shape.

S2: Change the casting range indicated by the ranged skill indicator into the updated rectangular shape.

Exemplarily, after the second boundary point mapped on the virtual ground is determined according to a drag/slide operation on the joystick portion of the wheel control, the client determines the updated ranged skill indicator in a rectangular shape according to the first diagonal point and the updated second diagonal point, which are two diagonal points of the rectangular shape. The terminal changes a range of the ranged skill indicator according to the updated rectangle, to indicate a casting range of the ranged skill.

The first boundary point is determined based on a location of the first virtual character. Therefore, if the user changes the location of the first virtual character using a movement control in a process of casting the ranged skill, an updated first boundary point is determined based on the location of the first virtual character, and a shape and/or an area of the casting range is changed based on the updated first boundary point.

In a possible design, in the process of casting the ranged skill, in response to a movement operation on the movement control, the locations of the first virtual character and the first boundary point are changed simultaneously. The foothold of the first virtual character and the location of the first boundary point are always the same. In another possible design, in the process of casting the ranged skill, in response to a movement operation on the movement control, the foothold of the first virtual character is kept unchanged while changing the location of the first boundary point. In this case, the foothold of the first virtual character and the location of the first boundary point are no longer the same. In another possible design, in the process of casting the ranged skill, in response to a movement operation on the movement control, the location of the first boundary point is kept unchanged while changing the foothold of the first virtual character. In this case, the foothold of the first virtual character and the location of the first boundary point are no longer the same.

Step 208: Determine, in response to ending the drag operation, a current skill effective range of the ranged skill based on the casting range.

The skill effective range is a skill range of the ranged skill after the ranged skill is cast. According to the casting range, the client may automatically adjust the current skill effective range of the ranged skill.

In some embodiments, the casting range is the same as the skill effective range. The terminal directly determines the casting range as the skill effective range.

In some embodiments, the casting range and the skill effective range are not exactly the same and are slightly different from each other. The terminal determines the skill effective range by using the casting range as a reference.

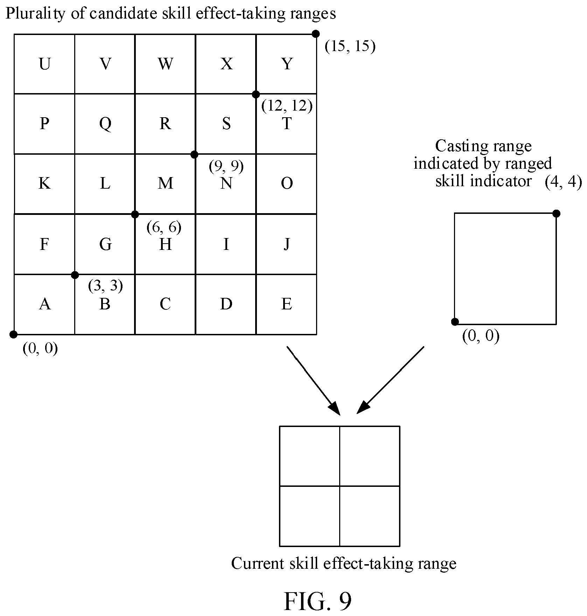

Schematically, the ranged skill includes a plurality of candidate skill effective ranges. Schematically, referring to FIG. 9, a world coordinate system is established by using the ground in the virtual environment as a reference plane and the location of the first virtual character as a center, and a maximum skill effective range of the ranged skill is divided into a plurality of square regions in unit of 3 meters, which is merely an example. In this case, the ranged skill includes 5 candidate square skill effective ranges and a plurality of candidate rectangular skill effective ranges:

First skill effective range: Coordinates of the first boundary point are (0, 0), coordinates of the second boundary point are (3, 3), and the first skill effective range includes blocks A, B, F, and G.

Second skill effective range: Coordinates of the first boundary point are (0, 0), coordinates of the second boundary point are (6, 6), the second skill effective range includes blocks A, B, C, F, G, H, K, L, and M.

Third skill effective range: Coordinates of the first boundary point are (0, 0), coordinates of the second boundary point are (9, 9), the third skill effective range includes blocks A, B, C, F, G, H, K, L, M, and N.

Fourth skill effective range: Coordinates of the first boundary point are (0, 0), and coordinates of the second boundary point are (12, 12).

Fifth skill effective range: Coordinates of the first boundary point are (0, 0), and coordinates of the second boundary point are (15, 15). The fifth skill effective range is the maximum skill effective range of the ranged skill.

The plurality of candidate rectangular skill effective ranges include:
a sixth skill effective range, including blocks A and B;
a seventh skill effective range, including blocks A, B, and C;
an eighth skill effective range, including blocks A, B, C, and D;
a ninth skill effective range, including blocks A, B, C, D, and E; and
a tenth skill effective range, including blocks A, B, C, D, F, G, and H.

More candidate rectangular skill effective ranges can be obtained in the similar manner, details are not described. Each rectangular skill effective range includes a plurality of adjacent blocks.

In a possible design, a smallest circumscribed skill effective range of the casting range is selected from the plurality of candidate skill effective ranges, and is determined as the current skill effective range of the ranged skill. A "smallest circumscribed" skill effective range is the smallest one of the plurality of candidate skill effective ranges including or covering the casting range.

Referring to FIG. 9, it is assumed that the coordinates of the second boundary point corresponding to the casting range are (4, 4). Therefore, the coordinates of the second boundary point are rounded up to (6, 6), and the second skill effective range is determined as the current skill effective range of the ranged skill. In another example, it is assumed that the coordinates of the second boundary point corresponding to the casting range are (2, 4). Therefore, the coordinates of the second boundary point are rounded up to (3, 6), and the range of the block A and block F are determined as the current skill effective range of the ranged skill.

In another possible design, the skill effective range having the highest overlapping area ratio with the casting range is selected from the plurality of candidate skill effective ranges, and is determined as the current skill effective range of the ranged skill.

Referring to FIG. 9, it is assumed that the coordinates of the second boundary point corresponding to the casting range are (4, 4), the overlapping area ratio between the first skill effective range and the casting range is 9/16=56%, and the overlapping area ratio between the second skill effective range and the casting range is 16/36=44%. Therefore, the first skill effective range is determined as the current skill effective range of the ranged skill.

Step 210: Cast the ranged skill in the current skill effective range.

After the ranged skill is cast, the ranged skill may generate a skill effect value for the second virtual character 32 within the current skill effective range. The skill effect value may be a hit point damage value, a hit point recovery value, a mana damage value, a mana recovery value, or the like.

Exemplarily, an effect value of the ranged skill within the current skill effective range is determined according to an effective area ratio. The effective area ratio is a ratio between an area of the current skill effective range and a maximum skill effective area of the ranged skill. The maximum skill effective area of the ranged skill refers an area of a largest range in which the ranged skill can effectively produce an effect, which is the casting range generated by a drag operation of the user at a boundary of the wheel region, for example, the fifth skill effective range in FIG. 9.

In a possible design, an effect value per unit area of the ranged skill is determined according to the effective area ratio. The effect value per unit area refers to a skill effect value in a unit area.

Exemplarily, a total effect value of the ranged skill remains unchanged. Therefore, when the effective area ratio is small, the effect value per unit area is large; and when the effective area ratio is large, the effect value per unit area is small. In this way, in a case that there are fewer enemy virtual characters, more damage can be caused.

In a possible design, a total effect value of the ranged skill is determined according to the effective area ratio. The total effect value refers to an effect value generated on a total area of the current skill effective range.

Exemplarily, the effect value per unit area of the ranged skill remains unchanged. Therefore, when the effective area ratio is small, the total effect value is small; and when the effective area ratio is large, the total effect value is large. In this way, in a case that the total effect value is small, the mana cost of the first virtual character can be saved.

Using the ranged skill being a skill with a site blocking effect as an example, after the ranged skill is cast according to an operation of a user, a blocking effect is produced in the current skill effective range, so that the enemy virtual character located in the current skill effective range cannot leave the current skill effective range and can only move within the current skill effective range, thereby continuously producing an effect on the enemy virtual character.

Referring to FIG. 8, after the ranged skill is cast, the current skill effective range 39 is displayed on the user interface 30, and an animation effect will be displayed on the current skill effective range 39. To ensure displaying consistent animation effect each time when the ranged skill is cast, engineers may create the animation effect according to the maximum skill effective range. In a case that the current skill effective range 39 is smaller than the maximum skill effective range, a mask layer is used to block an animation effect beyond the current skill effective range 39, and only the animation effect within the current skill effective range 39 is retained and displayed. Such a display manner does not require stretching or scaling down the animation effect. Therefore, the animation effect can be displayed consistently in different skill effective ranges.

In conclusion, in the method provided in this embodiment, a drag operation on a drag control is received, two boundary points of a casting range are determined respectively based on a location of a first virtual character and a location of the drag control, and further, a shape and/or an area of the casting range are/is changed in response to the drag operation. The area and/or the shape of the casting range indicated by a ranged skill indicator can be changed by receiving only one operation. Therefore, a method of casting a ranged skill with a customized casting range is provided, to simplify processing steps of a terminal in attacking a plurality of enemy virtual characters at scattered locations, thereby improving the efficiency of the terminal processing a ranged skill.

In the method provided in this embodiment, a location selected by the joystick portion is further mapped to the reference plane of the virtual environment by receiving a drag operation on the joystick portion of the wheel control, thereby changing the area and/or the shape of the casting range indicated by the ranged skill indicator, and using the joystick portion of the wheel control to control the casting range can simplify the processing steps of the terminal, so that the terminal can efficiently handle the process of aiming at the enemy virtual character.

In the method provided in this embodiment, an effect value of the ranged skill within the current skill effective range can be further determined using an effective area ratio, to determine a casting range of the ranged skill according to a quantity of enemy virtual characters and the region in which the enemy virtual characters are distributed, thereby saving the mana cost of the first virtual character while causing more damage to the enemy virtual characters.

### Second Manner

FIG. 10 is a flowchart of a method for controlling a virtual character to cast a skill according to an exemplary embodiment in the present disclosure. The method may be performed by a computer device. For example, the method may be performed by a terminal or a client on a terminal as shown in FIG. 1. As shown in FIG. 6, the method includes the following steps 202 to 210.

Step 202: Display a first virtual character and a skill control, the skill control being used to cast a ranged skill.

Reference may be made to step 202 shown in FIG. 2, and details are not described again.

Step 204b: Display a ranged skill indicator on a reference plane of a virtual environment in response to a trigger operation on the skill control; and display a drag button at a second boundary point of the ranged skill indicator, the ranged skill indicator being used to indicate a casting range of the ranged skill, the casting range having a first boundary point and the second boundary point, the first boundary point being determined based on a location of the first virtual character, and the second boundary point being determined based on a location of a drag control.

Exemplarily, the drag control includes a drag button. The user triggers the skill control to evoke the drag button in the virtual environment screen, and may determine a location of the second boundary point by moving the drag button in the virtual environment screen.

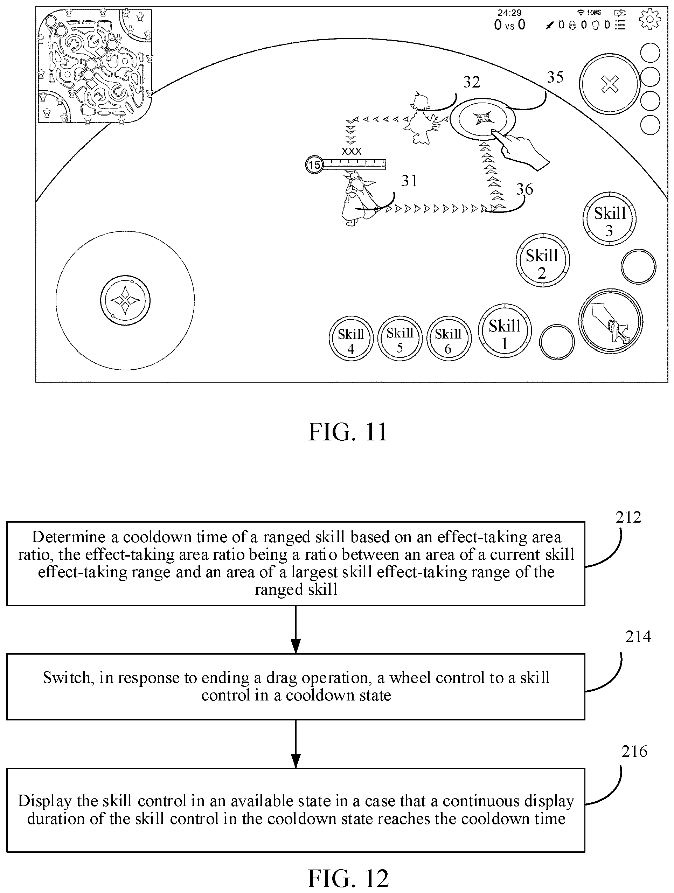

Exemplarily, as shown in FIG. 11, when the user clicks/taps the skill control "skill 3", the drag button 35 may be evoked in the virtual environment screen, and the ranged skill indicator 36 and the drag button 35 are displayed on the virtual environment screen of the user interface. The user can press and move the drag button 35 in the displayed screen of the virtual environment, and the client determines a final location of the drag button 35 on the reference plane of the virtual environment as the second boundary point. The ranged skill indicator 36 is in a shape of a rectangle displayed on the reference plane with a location of the first virtual character 31 as the first boundary point and a final determined location of the drag button 35 on the reference plane as the second boundary point. Exemplarily, in a case that the drag button is evoked, pressing and moving the drag button can change the location of the second boundary point on the reference plane, thereby changing the region range indicated by the ranged skill indicator.

Step 206c: Update, in response to a drag operation on the drag button, the second boundary point based on a location of the drag button on the reference plane, to obtain an updated second boundary point.

Exemplarily, after the terminal displays the ranged skill indicator, the terminal detects a drag operation of the drag button on the virtual environment screen, and the client determines the second boundary point according to a location of the drag button on the virtual ground.

For example, in response to that the terminal detects a leftward sliding operation on the joystick portion 35b, the terminal moves the mapped location of the joystick portion 35b mapped on the virtual ground leftward with the leftward sliding operation, to determine the second boundary point 38, and updates the display location of the second boundary point 38.

In an optional embodiment, the ranged skill has a plurality of candidate boundary points, and the second boundary point can only be selected from the plurality of candidate boundary points. In response to the drag operation on the drag button, the updated second boundary point is determined from the plurality of candidate boundary points based on the location of the drag button on the reference plane.

Exemplarily, a manner of determining the second boundary point based on the location of the drag button on the reference plane may be: determining a candidate boundary point nearest to the location as an updated second boundary point; or determining a candidate boundary point at the upper right of the mapped location and nearest to the location as an updated second boundary point; or determining a candidate boundary point at the lower left of the mapped location and the nearest to the location as an updated second boundary point.

Exemplarily, each candidate boundary point corresponds to a candidate skill effective range. If the drag operation is ended when a corresponding candidate boundary point is selected as the second boundary point, the selected casting range is a skill effective range corresponding to the candidate boundary point. That is, in response to ending the drag operation, the ranged skill is cast in a current skill effective range, the current skill effective range being equal to a casting range.

Step 206d: Change at least one of a shape or an area of the casting range based on the updated second boundary point.

Because the casting range is determined based on the first boundary point and the second boundary point, in a case that the second boundary point is updated, the shape and/or the area of the casting range are/is changed based on the updated second boundary point.

The first boundary point is determined based on a location of the first virtual character. Therefore, if the user changes the location of the first virtual character using a movement control in a process of casting the ranged skill, an updated first boundary point is determined based on the location of the first virtual character, and a shape and/or an area of the casting range is changed based on the updated first boundary point.

Using the casting range being a rectangular shape as an example, this step includes the following two steps:
S1: Determine an updated rectangular shape by using the first diagonal point and the updated second diagonal point as two diagonal points of the rectangular shape.

S2: Change the casting range indicated by the ranged skill indicator into the updated rectangular shape.

Exemplarily, after the second boundary point mapped on the virtual ground is determined according to a drag/slide operation on the joystick portion of the wheel control, the client determines the updated ranged skill indicator in a rectangular shape according to the first diagonal point and the updated second diagonal point, which are two diagonal points of the rectangular shape. The terminal changes a range of the ranged skill indicator according to the updated rectangle, to indicate a casting range of the ranged skill.

Step 208: Determine, in response to ending the drag operation, a current skill effective range of the ranged skill based on the casting range.

The skill effective range is a skill range of the ranged skill after the ranged skill is cast. According to the casting range, the client may automatically adjust the current skill effective range of the ranged skill.

In some embodiments, the casting range is the same as the skill effective range. The terminal directly determines the casting range as the skill effective range.

In some embodiments, the casting range and the skill effective range are not exactly the same and are slightly different from each other. The terminal determines the skill effective range by using the casting range as a reference.

Schematically, the ranged skill includes a plurality of candidate skill effective ranges. Schematically, referring to FIG. 9, a world coordinate system is established by using the ground in the virtual environment as a reference plane and the location of the first virtual character as a center, and the reference plane is divided into a plurality of small-area regions in unit of 3 meter. In this case, the ranged skill includes 5 candidate skill effective ranges:

First skill effective range: Coordinates of the first boundary point are (0, 0), and coordinates of the second boundary point are (3, 3).

Second skill effective range: Coordinates of the first boundary point are (0, 0), and coordinates of the second boundary point are (6, 6).

Third skill effective range: Coordinates of the first boundary point are (0, 0), and coordinates of the second boundary point are (9, 9).

Fourth skill effective range: Coordinates of the first boundary point are (0, 0), and coordinates of the second boundary point are (12, 12).

Fifth skill effective range: Coordinates of the first boundary point are (0, 0), and coordinates of the second boundary point are (15, 15). The fifth skill effective range is the maximum skill effective range of the ranged skill.

In a possible design, a smallest circumscribed skill effective range of the casting range is selected from the plurality of candidate skill effective ranges, and is determined as the current skill effective range of the ranged skill. A "smallest circumscribed" skill effective range is the smallest one of the plurality of candidate skill effective ranges including or covering the casting range.

In another possible design, the skill effective range having the highest overlapping area ratio with the casting range is selected from the plurality of candidate skill effective ranges, and is determined as the current skill effective range of the ranged skill.

Step 210: Cast the ranged skill in the current skill effective range.

After the ranged skill is cast, the ranged skill may generate a skill effect value for the second virtual character 32 within the current skill effective range. The skill effect value may be a hit point damage value, a hit point recovery value, a mana damage value, a mana recovery value, or the like.

Exemplarily, an effect value of the ranged skill within the current skill effective range is determined according to an effective area ratio. The effective area ratio is a ratio between an area of the current skill effective range and a maximum skill effect area of the ranged skill. The maximum skill effective area of the ranged skill refers an area of a largest range in which the ranged skill can effectively produce an effect, which is the casting range generated by a drag operation of the user at a boundary of the wheel region, for example, the fifth skill effective range in FIG. 9.

In a possible design, the effect value per unit area of the ranged skill is determined according to the effective area ratio. The effect value per unit area refers to a skill effect value in a unit area.

Exemplarily, a total effect value of the ranged skill remains unchanged. Therefore, when the effective area ratio is small, the effect value per unit area is large; and when the effective area ratio is large, the effect value per unit area is small. In this way, in a case that there are fewer enemy virtual characters, more damage can be caused.

In a possible design, a total effect value of the ranged skill is determined according to the effective area ratio. The total effect value refers to an effect value generated on a total area of the current skill effective range.

Exemplarily, the effect value per unit area of the ranged skill remains unchanged. Therefore, when the effective area ratio is small, the total effect value is small; and when the effective area ratio is large, the total effect value is large. In this way, in a case that the total effect value is small, the mana cost of the first virtual character can be saved.

Using the ranged skill being a skill with a site blocking effect as an example, after the ranged skill is cast according to an operation of a user, a blocking effect is produced in the current skill effective range, so that the enemy virtual character located in the current skill effective range cannot leave the current skill effective range and can only move within the current skill effective range, thereby continuously producing an effect on the enemy virtual character.

In conclusion, in the method provided in this embodiment, a drag operation on a drag control is received, two boundary points of a casting range are determined respectively based on a location of a first virtual character and a location of the drag control, and further, a shape and/or an area of the casting range are/is changed in response to the drag operation. The area and/or the shape of the casting range indicated by a ranged skill indicator can be changed by receiving only one operation. Therefore, a method of casting a ranged skill with a customized casting range is provided, to simplify processing steps of a terminal in attacking a plurality of enemy virtual characters at scattered locations, thereby improving the efficiency of the terminal processing the ranged skill.

In the method provided in this embodiment, the drag button located in the virtual environment screen is displayed by receiving a trigger operation on the skill control, a drag operation is received using the drag button in the virtual environment screen, and a location of the second boundary point is determined based on the drag operation, thereby changing an area and/or a shape of a casting range indicated by the ranged skill indicator. By displaying the drag button in the virtual environment screen, the accuracy of the drag operation received by the terminal can be improved, so that the terminal can accurately display the casting range selected by the operation in the virtual environment screen according to the drag operation.

In the method provided in this embodiment, an effect value of the ranged skill within the current skill effective range can be further determined using an effective area ratio, to determine a casting range of the ranged skill according to a quantity of enemy virtual characters and the region in which the enemy virtual characters are distributed, thereby saving the mana cost of the first virtual character while causing more damage to the enemy virtual characters.

After a ranged skill is used, the ranged skill can be used again only after a cooldown time period. The present disclosure also provides optional steps for determining a cooldown time period based on a current skill effective range.

FIG. 12 is a flowchart of a method for controlling a virtual character to cast a skill according to an exemplary embodiment in the present disclosure. The method may be performed by a computer device. For example, the method may be performed by a terminal or a client on a terminal as shown in FIG. 1. Based on the foregoing method embodiment, the method may further include the following steps 212 to 216.

Step 212: Determine a cooldown time period of the ranged skill based on an effective area ratio, the effective area ratio being a ratio between an area of the current skill effective range and an area of a maximum skill effective range of the ranged skill.

After a ranged skill is cast, the ranged skill is cooled down. A cooldown time period refers to a time period during which the ranged skill cannot be used and is determined according to an effective area ratio. The effective area ratio is a ratio between an area of the current skill effective range and an area of a maximum skill effective range of the ranged skill. The maximum effective area of the ranged skill refers an area of a maximum range in which the ranged skill can effectively produce an effect, which is the casting range generated by the drag operation of the user at a boundary of the wheel region, for example, the fifth skill effective range in FIG. 9.

Exemplarily, the effective area ratio has a positive proportional relationship with the cooldown time period. The larger the effective area ratio, the larger the cooldown time period; and the smaller the effective area ratio, the smaller the cooldown time period.

Exemplarily, a product of the effective area ratio and a cooldown coefficient is determined as the cooldown time period of the ranged skill. Optionally, a compensation coefficient may be selected according to linear compensation or according to various other compensation manners such as nonlinear compensation and parabolic compensation, which is not limited in this embodiment. Exemplarily, if an area of the current skill effective range of the ranged skill is 50% of an area of the maximum skill effective range, the client may determines 50% of the maximum cooldown time period for the ranged skill as a cooldown buffer.

Exemplarily, among a plurality of candidate skill effective ranges, selecting a smaller skill effective range may result in a less cooldown time period of the ranged skill.

Step 214: Switch, in response to ending the drag operation, to displaying the skill control in a cooldown state.

Exemplarily, ending the end drag operation includes at least one of ending the dragging of the wheel control by the user or ending the pressing of the drag button by the user.

After the user ends the drag operation, the client may switch from the wheel control to the skill control in a cooldown state. In the cooldown stage, the wheel control cannot be operated, that is, the ranged skill cannot be cast.

Step 216: Display the skill control in an available state in a case that a time period of continuously displaying the skill control in the cooldown state reaches the cooldown time period.

Exemplarily, after the time period of continuously displaying the skill control in the cooldown state reaches the cooldown time period, the skill control will be restored to an available state. In this case, the ranged skill can be cast again by dragging the skill control.

This embodiment can be combined with any one of the three optional embodiments shown in FIG. 2, FIG. 6 and FIG. 9.

In conclusion, in the method provided in this embodiment, after receiving an action of ending the dragging, the terminal cools down the skill control for a specific time period, and restores the skill control to the available state when the time of cooldown reaches the cooldown time period, thereby increasing a quantity of effective uses of the ranged skill by compensating for the cooldown time period.

In the method provided in this embodiment, the cooldown time period of the ranged skill is further determined based on the effective area ratio, so that the cooldown time period of the ranged skill can be reduced by selecting a smaller skill effective range among the plurality of candidate skill effective ranges.

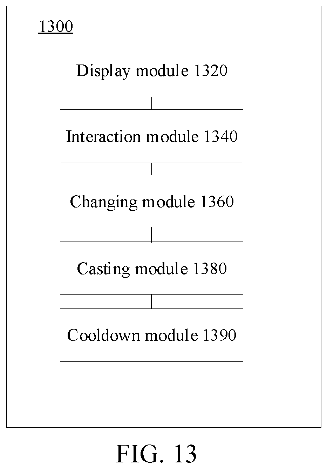

FIG. 13 is a schematic structural diagram of an apparatus 1300 for controlling a virtual character to cast a skill according to an exemplary embodiment in the present disclosure. The apparatus 1300 may be implemented as an entire computer device or a part of the computer device by using software, hardware, or a combination thereof. The apparatus 1300 includes:
a display module 1320, configured to display a first virtual character and a skill control, the skill control being used to cast a ranged skill;
an interaction module 1340, configured to display a ranged skill indicator and a drag control in response to a trigger operation on the skill control, the ranged skill indicator being used to indicate a casting range of the ranged skill, the casting range having a first boundary point and a second boundary point, the first boundary point being determined based on a location of the first virtual character, and the second boundary point being determined based on a location of the drag control; and
a changing module 1360, configured to change at least one of a shape or an area of the casting range in response to a drag operation on the drag control.

In a first implementation, the drag control includes a wheel control.

The interaction module 1340 is configured to display the ranged skill indicator on a reference plane of a virtual environment in response to the trigger operation on the skill control; and display the skill control as the wheel control, the wheel control including a wheel region and a joystick portion.

The changing module 1360 is configured to change at least one of the shape or the area of the casting range in response to a drag operation on the joystick portion.

In an optional design of this embodiment, the changing module 1360 is configured to update, in response to the drag operation on the joystick portion, the second boundary point based on a mapped location of the joystick portion mapped on the reference plane, to obtain an updated second boundary point; and change at least one of the shape or the area of the casting range based on the updated second boundary point.

In a second implementation, the drag control includes a drag button.

The interaction module 1340 is configured to display the ranged skill indicator on a reference plane of a virtual environment in response to the trigger operation on the skill control; and display the drag button at the second boundary point of the ranged skill indicator.

The changing module 1360 is configured to change at least one of the shape or the area of the casting range in response to a drag operation on the drag button.

In an optional design of this embodiment, the changing module 1360 is configured to update, in response to the drag operation on the drag button, the second boundary point based on a location of the drag button on the reference plane, to obtain an updated second boundary point; and change at least one of the shape or the area of the casting range based on the updated second boundary point.

In an optional design of this embodiment, the ranged skill indicator is a skill indicator in a rectangular shape, the first boundary point is a first diagonal point of the rectangular shape, and the second boundary point is a second diagonal point of the rectangular shape.

The changing module 1360 is configured to determine an updated rectangular shape by using the first diagonal point and the updated second diagonal point as two diagonal points of the rectangular shape; change the casting range indicated by the ranged skill indicator into the updated rectangular shape.

In an optional design of this embodiment, the apparatus further includes:
a casting module 1380, configured to determine, in response to ending the drag operation, a current skill effective range of the ranged skill based on the casting range; and cast the ranged skill in the current skill effective range.

In an optional design of this embodiment, the ranged skill includes a plurality of candidate skill effective ranges.

The casting module 1380 is configured to select, in response to ending the drag operation, a skill effective range having the highest overlapping area ratio with the casting range from the plurality of candidate skill effective ranges, as the current skill effective range of the ranged skill.

Alternatively, the casting module 1380 is configured to selecting, in response to ending the drag operation, a smallest circumscribed skill effective range of the casting range from the plurality of candidate skill effective ranges, as the current skill effective range of the ranged skill.

In an optional design of this embodiment, the casting module 1380 is configured to determine an effect value per unit area of the ranged skill based on an effective area ratio, the effective area ratio being a ratio between an area of the current skill effective range and an area of a maximum skill effective range of the ranged skill; and cast the ranged skill based on the effect value per unit area in the current skill effective range.

Alternatively, the casting module 1380 is configured to determine a total effect value of the ranged skill based on an effective area ratio, the effective area ratio being a ratio between an area of the current skill effective range and an area of a maximum skill effective range of the ranged skill; and cast the ranged skill based on the total effect value in the current skill effective range.

In an optional design of this embodiment, the ranged skill includes a plurality of candidate boundary points.

The changing module 1360 is configured to determine, in response to the drag operation on the joystick portion, the updated second boundary point from the plurality of candidate boundary points based on the mapped location of the joystick portion mapped on the reference plane.

In an optional design of this embodiment, the ranged skill includes a plurality of candidate boundary points.

The changing module 1360 is configured to determine, in response to the drag operation on the drag button, the updated second boundary point from the plurality of candidate boundary points based on the location of the drag button on the reference plane.

In an optional design of this embodiment, the casting module 1380 is configured to cast the ranged skill in the current skill effective range in response to ending the drag operation, the current skill effective range being equal to the casting range.

In an optional design of this embodiment, the apparatus further includes:
a cooldown module 1390, configured to determine a cooldown time period of the ranged skill based on an effective area ratio, the effective area ratio being a ratio between an area of the current skill effective range and an area of a maximum skill effective range of the ranged skill.

The display module 1320 is further configured to switch, in response to ending the drag operation, to displaying the wheel control as the skill control in a cooldown state; and display the skill control in an available state in a case that a time period of continuously displaying the skill control in the cooldown state reaches the cooldown time period.

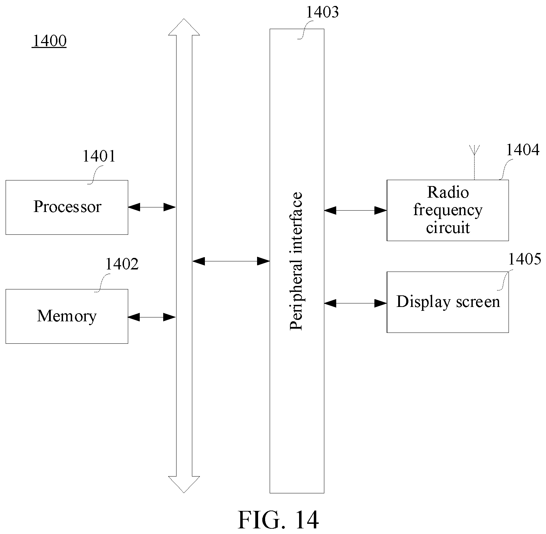

FIG. 14 is a structural block diagram of a computer device 1400 according to an exemplary embodiment in the present disclosure. The computer device 1400 may be a portable mobile terminal, such as a smartphone, a tablet computer, an MP3 (Moving Picture Experts Group Audio Layer III) player, or an MP4(Moving Picture Experts Group Audio Layer IV) player. The computer device 1400 may be further referred to as user equipment, a portable terminal or the like.

Generally, the computer device 1400 includes a processor 1401 and a memory 1402.

The processor 1401 may include one or more processing cores, for example, a 4-core processor or an 8-core processor. The processor 1401 may be implemented by using at least one hardware form of a digital signal processor (DSP), a field programmable gate array (FPGA), and a programmable logic array (PLA). The processor 1401 may also include a main processor and a coprocessor. The main processor is a processor configured to process data in an awake state, and is also referred to as a central processing unit (CPU). The coprocessor is a low power consumption processor configured to process the data in a standby state. In some embodiments, the processor 1401 may be integrated with a graphics processing unit (GPU). The GPU is configured to render and draw content that needs to be displayed on a display screen. In some embodiments, the processor 1401 may further include an artificial intelligence (AI) processor. The AI processor is configured to process computing operations related to machine learning.

The memory 1402 may include one or more computer-readable storage media. The computer-readable storage medium may be tangible and non-transient. The memory 1402 may further include a high-speed random access memory and a nonvolatile memory, for example, one or more disk storage devices or flash storage devices. In some embodiments, a non-transitory computer-readable storage medium in the memory 1402 is configured to store at least one instruction, the at least one instruction being executed by the processor 1401 to implement the method for displaying a virtual environment screen provided in the method embodiments in the present disclosure.

In some embodiments, the computer device 1400 further optionally includes a peripheral device interface 1403 and at least one peripheral. Specifically, the peripheral includes at least one of a radio frequency circuit 1404 or a display screen 1405.

The peripheral interface 1403 may be configured to connect the at least one peripheral related to input/output (I/O) to the processor 1401 and the memory 1402. In some embodiments, the processor 1401, the memory 1402 and the peripheral device interface 1403 are integrated on a same chip or circuit board. In some other embodiments, any one or two of the processor 1401, the memory 1402, and the peripheral device interface 1403 may be implemented on a single chip or circuit board. This is not limited in this embodiment.

The RF circuit 1404 is configured to receive and transmit an RF signal, also referred to as an electromagnetic signal. The RF circuit 1404 communicates with a communication network and other communication devices through the electromagnetic signal. The RF circuit 1404 converts an electric signal into an electromagnetic signal for transmission, or converts a received electromagnetic signal into an electric signal. Optionally, the RF circuit 1404 includes: an antenna system, an RF transceiver, one or more amplifiers, a tuner, an oscillator, a digital signal processor, a codec chip set, a subscriber identity module card, and the like. The RF circuit 1404 may communicate with another terminal by using at least one wireless communication protocol. The wireless communication protocol includes, but is not limited to, a world wide web, a metropolitan area network, an intranet, generations of mobile communication networks (2G, 3G, 4G, and 5G), a wireless local area network and/or a wireless fidelity (Wi-Fi) network. In some embodiments, the RF 1404 may further include a circuit related to NFC (Near Field Communication), which is not limited in the present disclosure.

The display screen 1405 is configured to display a user interface (UI). The UI may include a graph, text, an icon, a video, and any combination thereof. The display screen 1405 also has a capability of acquiring a touch signal on or above a surface of the display screen 1405. The touch signal may be inputted to the processor 1401 as a control signal for processing. The display screen 1405 is configured to provide a virtual button and/or a virtual keyboard, which is also referred to as a soft button and/or a soft keyboard. In some embodiments, there may be one display screen 1405, disposed on a front panel of the computer device 1400. In some other embodiments, there may be at least two display screens 1405, disposed on different surfaces of the computer device 1400 respectively or in a folded design. In still other embodiments, the display screen 1405 may be a flexible display screen, disposed on a curved surface or a folded surface of the computer device 1400. Even, the display screen 1405 may be further set in a non-rectangular irregular pattern, namely, a special-shaped screen. The touch display screen 1405 may be made of a material such as a liquid crystal display (LCD) or an organic light-emitting diode (OLED).

A person skilled in the art may understand that the structure shown in FIG. 14 does not constitute any limitation on the computer device 1400, and the computer device may include more components or fewer components than those shown in the figure, or some components may be combined, or a different component deployment may be used.

The embodiments in the present disclosure further provide a computer device including a processor and a memory, the memory storing at least one instruction, at least one segment of program, a code set, or an instruction set, the at least one instruction, the at least one segment of program, the code set, or the instruction set being used to be loaded and executed by the processor to implement the method for displaying a virtual environment screen provided in the foregoing method embodiments.

The embodiments in the present disclosure further provide a computer-readable storage medium, storing at least one instruction, at least one program, a code set, or an instruction set, the at least one instruction, the at least one program, the code set, or the instruction set being used to be loaded and executed by a processor to implement the method for displaying a virtual environment screen provided in the foregoing method embodiments.

"Plurality of" mentioned in the specification means two or more. "And/or" describes an association relationship between associated objects and represents that three relationships may exist. For example, A and/or B may represent the following three cases: Only A exists, both A and B exist, and only B exists. The character "/" in this specification generally indicates an "or" relationship between the associated objects.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

## Claims

1. A method for controlling a virtual character to cast a skill, performed by a computer device, the method comprising:
displaying (202) a first virtual character and a skill control, the skill control being used to cast a ranged skill;
displaying (204) a ranged skill indicator and a drag control in response to a trigger operation on the skill control, the ranged skill indicator being used to indicate a casting range of the ranged skill, the casting range having a first boundary point and a second boundary point, the first boundary point being determined based on a location of the first virtual character, and the second boundary point being determined based on a location of the drag control; and
changing (206) at least one of a shape or an area of the casting range in response to a drag operation on the drag control,
the method being **characterized in**:
wherein the drag control comprises a wheel control;
the displaying (204) a ranged skill indicator and a drag control in response to a trigger operation on the skill control comprises:
displaying the ranged skill indicator on a reference plane of a virtual environment in response to the trigger operation on the skill control; and displaying the skill control as the wheel control, the wheel control comprising a wheel region and a joystick portion; and
the changing (206) at least one of a shape or an area of the casting range in response to a drag operation on the drag control comprises:
changing at least one of the shape or the area of the casting range in response to a drag operation on the joystick portion,
wherein the changing at least one of a shape or an area of the casting range in response to a drag operation on the joystick portion comprises:
updating (206a), in response to the drag operation on the joystick portion, the second boundary point based on a mapped location of the joystick portion mapped on the reference plane, to obtain an updated second boundary point; and
changing (206b) at least one of the shape or the area of the casting range based on the updated second boundary point.

2. The method according to claim 1, wherein the ranged skill indicator is a skill indicator in a rectangular shape, the first boundary point is a first diagonal point of the rectangular shape, and the second boundary point is a second diagonal point of the rectangular shape; and
the changing (206b) at least one of the shape or the area of the casting range based on the updated second boundary point comprises:
determining an updated rectangular shape by using the first diagonal point and the updated second diagonal point as two diagonal points of the rectangular shape;
changing the casting range indicated by the ranged skill indicator into the updated rectangular shape.

3. The method according to any one of claims 1 to 2, wherein the method further comprises:
determining (208), in response to ending the drag operation, a current skill effective range of the ranged skill based on the casting range; and
casting (210) the ranged skill in the current skill effective range.

4. The method according to claim 3, wherein the ranged skill comprises a plurality of candidate skill effective ranges; and
the determining (208), in response to ending the drag operation, a current skill effective range of the ranged skill based on the casting range comprises:
selecting, in response to ending the drag operation, a skill effective range having the highest overlapping area ratio with the casting range from the plurality of candidate skill effective ranges, as the current skill effective range of the ranged skill; or
selecting, in response to ending the drag operation, a smallest circumscribed skill effective range of the casting range from the plurality of candidate skill effective ranges, as the current skill effective range of the ranged skill.

5. The method according to claim 4, wherein the casting (210) the ranged skill in the current skill effective range comprises:
determining an effect value per unit area of the ranged skill based on an effective area ratio, the effective area ratio being a ratio between an area of the current skill effective range and an area of a maximum skill effective range of the ranged skill; and casting the ranged skill based on the effect value per unit area in the current skill effective range; or
determining a total effect value of the ranged skill based on an effective area ratio, the effective area ratio being a ratio between an area of the current skill effective range and an area of a maximum skill effective range of the ranged skill; and casting the ranged skill based on the total effect value in the current skill effective range.

6. The method according to claim 1, wherein the ranged skill comprises a plurality of candidate boundary points; and
the updating (206a), in response to the drag operation on the joystick portion, the second boundary point based on a mapped location of the joystick portion mapped on the reference plane, to obtain an updated second boundary point comprises:
determining, in response to the drag operation on the joystick portion, the updated second boundary point from the plurality of candidate boundary points based on the mapped location of the joystick portion mapped on the reference plane.

7. The method according to claim 6, wherein the method further comprises:
casting the ranged skill in the current skill effective range in response to ending the drag operation, the current skill effective range being equal to the casting range.

8. The method according to claim 1, wherein the method further comprises:
determining (212) a cooldown time period of the ranged skill based on an effective area ratio, the effective area ratio being a ratio between an area of a current skill effective range and an area of a maximum skill effective range of the ranged skill; and
switching (214), in response to ending the drag operation, to displaying the wheel control as the skill control in a cooldown state; and
displaying (216) the skill control in an available state in a case that a time period of continuously displaying the skill control in the cooldown state reaches the cooldown time period.

9. A computer device (1400), comprising a processor (1401) and a memory (1402), the memory (1402) storing at least one program, the at least one program being used to be loaded and executed by the processor (1401) to implement the method for controlling a virtual character to cast a skill according to any one of claims 1 to 8.

10. A computer-readable storage medium, storing at least one program, the at least one program being used to be loaded and executed by a processor to implement the method for controlling a virtual character to cast a skill according to any one of claims 1 to 8.

## Patentansprüche

1. Verfahren zum Steuern einer virtuellen Figur zum Wirken einer Fähigkeit, ausgeführt durch eine Rechenvorrichtung, wobei das Verfahren umfasst:
Anzeigen (202) einer ersten virtuellen Figur und eines Fähigkeitssteuerelements, wobei das Fähigkeitssteuerelement zum Wirken einer Reichweitenfähigkeit verwendet wird;
Anzeigen (204) eines Reichweitenfähigkeitsindikators und eines Ziehsteuerelements als Reaktion auf einen Auslösevorgang an dem Fähigkeitssteuerelement, wobei der Reichweitenfähigkeitsindikator zum Angeben eines Wirkbereichs der Reichweitenfähigkeit verwendet wird, wobei der Wirkbereich einen ersten Grenzpunkt und einen zweiten Grenzpunkt aufweist, wobei der erste Grenzpunkt auf der Grundlage eines Orts der ersten virtuellen Figur bestimmt wird und der zweite Grenzpunkt auf der Grundlage eines Orts des Ziehsteuerelements bestimmt wird; und
Ändern (206) mindestens einer von einer Form oder einer Fläche des Wirkbereichs als Reaktion auf einen Ziehvorgang an dem Ziehsteuerelement,
wobei das Verfahren **dadurch gekennzeichnet ist, dass**:
wobei das Ziehsteuerelement ein Radsteuerelement umfasst;
wobei das Anzeigen (204) eines Reichweitenfähigkeitsindikators und eines Ziehsteuerelements als Reaktion auf einen Auslösevorgang an dem Fähigkeitssteuerelement umfasst:
Anzeigen des Reichweitenfähigkeitsindikators auf einer Bezugsebene einer virtuellen Umgebung als Reaktion auf den Auslösevorgang an dem Fähigkeitssteuerelement; und
Anzeigen des Fähigkeitssteuerelements als das Radsteuerelement, wobei das Radsteuerelement einen Radbereich und einen Joystick-Abschnitt umfasst; und
wobei das Ändern (206) mindestens einer von einer Form oder einer Fläche des Wirkbereichs als Reaktion auf einen Ziehvorgang an dem Ziehsteuerelement umfasst:
Ändern mindestens einer von der Form oder der Fläche des Wirkbereichs als Reaktion auf einen Ziehvorgang an dem Joystick-Abschnitt,
wobei das Ändern mindestens einer von einer Form oder einer Fläche des Wirkbereichs als Reaktion auf einen Ziehvorgang an dem Joystick-Abschnitt umfasst:
Aktualisieren (206a), als Reaktion auf den Ziehvorgang an dem Joystick-Abschnitt, des zweiten Grenzpunkts auf der Grundlage eines abgebildeten Orts des Joystick-Abschnitts, der auf die Bezugsebene abgebildet ist, um einen aktualisierten zweiten Grenzpunkt zu erhalten; und
Ändern (206b) mindestens einer von der Form oder der Fläche des Wirkbereichs auf der Grundlage des aktualisierten zweiten Grenzpunkts.

2. Verfahren nach Anspruch 1, wobei der Reichweitenfähigkeitsindikator ein Fähigkeitsindikator in einer rechteckigen Form ist, der erste Grenzpunkt ein erster Diagonalpunkt der rechteckigen Form ist und der zweite Grenzpunkt ein zweiter Diagonalpunkt der rechteckigen Form ist; und
wobei das Ändern (206b) mindestens einer von der Form oder der Fläche des Wirkbereichs auf der Grundlage des aktualisierten zweiten Grenzpunkts umfasst:
Bestimmen einer aktualisierten rechteckigen Form unter Verwendung des ersten Diagonalpunkts und des aktualisierten zweiten Diagonalpunkts als zwei Diagonalpunkte der rechteckigen Form;
Ändern des durch den Reichweitenfähigkeitsindikator angegebenen Wirkbereichs in die aktualisierte rechteckige Form.

3. Verfahren nach einem der Ansprüche 1 bis 2, wobei das Verfahren ferner umfasst:
Bestimmen (208), als Reaktion auf ein Beenden des Ziehvorgangs, eines aktuellen wirksamen Fähigkeitsbereichs der Reichweitenfähigkeit auf der Grundlage des Wirkbereichs; und
Wirken (210) der Reichweitenfähigkeit in dem aktuellen wirksamen Fähigkeitsbereich.

4. Verfahren nach Anspruch 3, wobei die Reichweitenfähigkeit eine Vielzahl von wirksamen Kandidaten-Fähigkeitsbereichen umfasst; und
wobei das Bestimmen (208), als Reaktion auf ein Beenden des Ziehvorgangs, eines aktuellen wirksamen Fähigkeitsbereichs der Reichweitenfähigkeit auf der Grundlage des Wirkbereichs umfasst:
Auswählen, als Reaktion auf ein Beenden des Ziehvorgangs, eines wirksamen Fähigkeitsbereichs mit dem höchsten Überlappungsflächenverhältnis mit dem Wirkbereich aus der Vielzahl von wirksamen Kandidaten-Fähigkeitsbereichen als den aktuellen wirksamen Fähigkeitsbereich der Reichweitenfähigkeit; oder
Auswählen, als Reaktion auf ein Beenden des Ziehvorgangs, eines kleinsten umschriebenen wirksamen Fähigkeitsbereichs des Wirkbereichs aus der Vielzahl von wirksamen Kandidaten-Fähigkeitsbereichen als den aktuellen wirksamen Fähigkeitsbereich der Reichweitenfähigkeit.

5. Verfahren nach Anspruch 4, wobei das Wirken (210) der Reichweitenfähigkeit in dem aktuellen wirksamen Fähigkeitsbereich umfasst:
Bestimmen eines Effektwerts pro Flächeneinheit der Reichweitenfähigkeit auf der Grundlage eines Wirkflächenverhältnisses, wobei das Wirkflächenverhältnis ein Verhältnis zwischen einer Fläche des aktuellen wirksamen Fähigkeitsbereichs und einer Fläche eines maximalen wirksamen Fähigkeitsbereichs der Reichweitenfähigkeit ist; und Wirken der Reichweitenfähigkeit auf der Grundlage des Effektwerts pro Flächeneinheit in dem aktuellen wirksamen Fähigkeitsbereich; oder
Bestimmen eines Gesamteffektwerts der Reichweitenfähigkeit auf der Grundlage eines Wirkflächenverhältnisses, wobei das Wirkflächenverhältnis ein Verhältnis zwischen einer Fläche des aktuellen wirksamen Fähigkeitsbereichs und einer Fläche eines maximalen wirksamen Fähigkeitsbereichs der Reichweitenfähigkeit ist; und Wirken der Reichweitenfähigkeit auf der Grundlage des Gesamteffektwerts in dem aktuellen wirksamen Fähigkeitsbereich.

6. Verfahren nach Anspruch 1, wobei die Reichweitenfähigkeit eine Vielzahl von Kandidaten-Grenzpunkten umfasst; und
wobei das Aktualisieren (206a), als Reaktion auf den Ziehvorgang an dem Joystick-Abschnitt, des zweiten Grenzpunkts auf der Grundlage eines abgebildeten Orts des Joystick-Abschnitts, der auf die Bezugsebene abgebildet ist, um einen aktualisierten zweiten Grenzpunkt zu erhalten, umfasst:
Bestimmen, als Reaktion auf den Ziehvorgang an dem Joystick-Abschnitt, des aktualisierten zweiten Grenzpunkts aus der Vielzahl von Kandidaten-Grenzpunkten auf der Grundlage des abgebildeten Orts des Joystick-Abschnitts, der auf die Bezugsebene abgebildet ist.

7. Verfahren nach Anspruch 6, wobei das Verfahren ferner umfasst:
Wirken der Reichweitenfähigkeit in dem aktuellen wirksamen Fähigkeitsbereich als Reaktion auf ein Beenden des Ziehvorgangs, wobei der aktuelle wirksame Fähigkeitsbereich gleich dem Wirkbereich ist.

8. Verfahren nach Anspruch 1, wobei das Verfahren ferner umfasst:
Bestimmen (212) eines Abklingzeitraums der Reichweitenfähigkeit auf der Grundlage eines Wirkflächenverhältnisses, wobei das Wirkflächenverhältnis ein Verhältnis zwischen einer Fläche eines aktuellen wirksamen Fähigkeitsbereichs und einer Fläche eines maximalen wirksamen Fähigkeitsbereichs der Reichweitenfähigkeit ist; und
Umschalten (214), als Reaktion auf ein Beenden des Ziehvorgangs, zum Anzeigen des Radsteuerelements als das Fähigkeitssteuerelement in einem Abklingzustand; und
Anzeigen (216) des Fähigkeitssteuerelements in einem verfügbaren Zustand in einem Fall, in dem ein Zeitraum des kontinuierlichen Anzeigens des Fähigkeitssteuerelements in dem Abklingzustand den Abklingzeitraum erreicht.

9. Rechenvorrichtung (1400), umfassend einen Prozessor (1401) und einen Speicher (1402), wobei der Speicher (1402) mindestens ein Programm speichert, wobei das mindestens eine Programm dazu verwendet wird, durch den Prozessor (1401) geladen und ausgeführt zu werden, um das Verfahren zum Steuern einer virtuellen Figur zum Wirken einer Fähigkeit nach einem der Ansprüche 1 bis 8 zu implementieren.

10. Computerlesbares Speichermedium, das mindestens ein Programm speichert, wobei das mindestens eine Programm dazu verwendet wird, durch einen Prozessor geladen und ausgeführt zu werden, um das Verfahren zum Steuern einer virtuellen Figur zum Wirken einer Fähigkeit nach einem der Ansprüche 1 bis 8 zu implementieren.

## Revendications

1. Procédé de commande d'un personnage virtuel pour lancer une compétence, exécuté par un dispositif informatique, le procédé comprenant :
l'affichage (202) d'un premier personnage virtuel et d'une commande de compétence, la commande de compétence étant utilisée pour lancer une compétence à portée ;
l'affichage (204) d'un indicateur de compétence à portée et d'une commande de glissement en réponse à une opération de déclenchement sur la commande de compétence, l'indicateur de compétence à portée étant utilisé pour indiquer une plage de lancement de la compétence à portée, la plage de lancement ayant un premier point limite et un second point limite, le premier point limite étant déterminé sur la base d'un emplacement du premier personnage virtuel, et le second point limite étant déterminé sur la base d'un emplacement de la commande de glissement ; et
la modification (206) d'au moins l'une parmi une forme ou une aire de la plage de lancement en réponse à une opération de glissement sur la commande de glissement, le procédé étant **caractérisé en ce que** :
dans lequel la commande de glissement comprend une commande de roue ;
l'affichage (204) d'un indicateur de compétence à portée et d'une commande de glissement en réponse à une opération de déclenchement sur la commande de compétence comprend :
l'affichage de l'indicateur de compétence à portée sur un plan de référence d'un environnement virtuel en réponse à l'opération de déclenchement sur la commande de compétence ; et l'affichage de la commande de compétence en tant que commande de roue, la commande de roue comprenant une région de roue et une portion de manette ; et
la modification (206) d'au moins l'une parmi une forme ou une aire de la plage de lancement en réponse à une opération de glissement sur la commande de glissement comprend :
la modification d'au moins l'une parmi la forme ou l'aire de la plage de lancement en réponse à une opération de glissement sur la portion de manette,
dans lequel la modification d'au moins l'une parmi une forme ou une aire de la plage de lancement en réponse à une opération de glissement sur la portion de manette comprend :
la mise à jour (206a), en réponse à l'opération de glissement sur la portion de manette, du second point limite sur la base d'un emplacement mappé de la portion de manette mappé sur le plan de référence, pour obtenir un second point limite mis à jour ; et
la modification (206b) d'au moins l'une parmi la forme ou l'aire de la plage de lancement sur la base du second point limite mis à jour.

2. Procédé selon la revendication 1, dans lequel l'indicateur de compétence à portée est un indicateur de compétence de forme rectangulaire, le premier point limite est un premier point diagonal de la forme rectangulaire, et le second point limite est un second point diagonal de la forme rectangulaire ; et
la modification (206b) d'au moins l'une parmi la forme ou l'aire de la plage de lancement sur la base du second point limite mis à jour comprend :
la détermination d'une forme rectangulaire mise à jour en utilisant le premier point diagonal et le second point diagonal mis à jour en tant que deux points diagonaux de la forme rectangulaire ;
la modification de la plage de lancement indiquée par l'indicateur de compétence à portée en la forme rectangulaire mise à jour.

3. Procédé selon l'une quelconque des revendications 1 à 2, dans lequel le procédé comprend en outre :
la détermination (208), en réponse à la fin de l'opération de glissement, d'une plage effective actuelle de la compétence à portée sur la base de la plage de lancement ; et
le lancement (210) de la compétence à portée dans la plage effective actuelle.

4. Procédé selon la revendication 3, dans lequel la compétence à portée comprend une pluralité de plages effectives candidates ; et
la détermination (208), en réponse à la fin de l'opération de glissement, d'une plage effective actuelle de la compétence à portée sur la base de la plage de lancement comprend :
la sélection, en réponse à la fin de l'opération de glissement, d'une plage effective ayant le rapport d'aire de chevauchement le plus élevé avec la plage de lancement parmi la pluralité de plages effectives candidates, en tant que plage effective actuelle de la compétence à portée ; ou
la sélection, en réponse à la fin de l'opération de glissement, d'une plage effective circonscrite la plus petite de la plage de lancement parmi la pluralité de plages effectives candidates, en tant que plage effective actuelle de la compétence à portée.

5. Procédé selon la revendication 4, dans lequel le lancement (210) de la compétence à portée dans la plage effective actuelle comprend :
la détermination d'une valeur d'effet par unité d'aire de la compétence à portée sur la base d'un rapport d'aire effective, le rapport d'aire effective étant un rapport entre une aire de la plage effective actuelle et une aire d'une plage effective maximale de la compétence à portée ; et le lancement de la compétence à portée sur la base de la valeur d'effet par unité d'aire dans la plage effective actuelle ; ou
la détermination d'une valeur d'effet totale de la compétence à portée sur la base d'un rapport d'aire effective, le rapport d'aire effective étant un rapport entre une aire de la plage effective actuelle et une aire d'une plage effective maximale de la compétence à portée ; et le lancement de la compétence à portée sur la base de la valeur d'effet totale dans la plage effective actuelle.

6. Procédé selon la revendication 1, dans lequel la compétence à portée comprend une pluralité de points limites candidats ; et
la mise à jour (206a), en réponse à l'opération de glissement sur la portion de manette, du second point limite sur la base d'un emplacement mappé de la portion de manette mappé sur le plan de référence, pour obtenir un second point limite mis à jour comprend :
la détermination, en réponse à l'opération de glissement sur la portion de manette, du second point limite mis à jour parmi la pluralité de points limites candidats sur la base de l'emplacement mappé de la portion de manette mappé sur le plan de référence.

7. Procédé selon la revendication 6, dans lequel le procédé comprend en outre :
le lancement de la compétence à portée dans la plage effective actuelle en réponse à la fin de l'opération de glissement, la plage effective actuelle étant égale à la plage de lancement.

8. Procédé selon la revendication 1, dans lequel le procédé comprend en outre :
la détermination (212) d'une période de recharge de la compétence à portée sur la base d'un rapport d'aire effective, le rapport d'aire effective étant un rapport entre une aire d'une plage effective actuelle et une aire d'une plage effective maximale de la compétence à portée ; et
la commutation (214), en réponse à la fin de l'opération de glissement, vers l'affichage de la commande de roue en tant que commande de compétence dans un état de recharge ; et
l'affichage (216) de la commande de compétence dans un état disponible dans le cas où une période de temps d'affichage continu de la commande de compétence dans l'état de recharge atteint la période de recharge.

9. Dispositif informatique (1400), comprenant un processeur (1401) et une mémoire (1402), la mémoire (1402) stockant au moins un programme, l'au moins un programme étant utilisé pour être chargé et exécuté par le processeur (1401) pour mettre en œuvre le procédé de commande d'un personnage virtuel pour lancer une compétence selon l'une quelconque des revendications 1 à 8.

10. Support de stockage lisible par ordinateur, stockant au moins un programme, l'au moins un programme étant utilisé pour être chargé et exécuté par un processeur pour mettre en œuvre le procédé de commande d'un personnage virtuel pour lancer une compétence selon l'une quelconque des revendications 1 à 8.
